Europäisches Patentamt

European Patent Office

Office européen des brevets

(19)

(11) Publication number: **0 131 640
B1**

# (12) EUROPEAN PATENT SPECIFICATION

(45) Date of publication of patent specification: **15.10.86**

(51) Int. Cl.⁴: **A 23 L 1/236**

(21) Application number: **83106882.0**

(22) Date of filing: **13.07.83**

(54) **Sweetening compositions and process for modifying the sweetness perception of a foodstuff.**

(43) Date of publication of application:
**23.01.85 Bulletin 85/04**

(45) Publication of the grant of the patent:
**15.10.86 Bulletin 86/42**

(84) Designated Contracting States:
**AT BE DE GB LU NL SE**

(56) References cited:
**DE-A-2 629 878
DE-A-2 629 941
US-A-3 717 477
US-A-4 158 068**

(73) Proprietor: **GENERAL FOODS CORPORATION
250 North Street
White Plains, N.Y. 10625 (US)**

(72) Inventor: **Barnett, Ronald Edward
73 East Maple Avenue
Suffern, N.Y. (US)**
Inventor: **Yarger, Ronald Gilbert
8 Boulevard Apt. 2
Suffern, N.Y. (US)**

(74) Representative: **Brauns, Hans-Adolf, Dr. rer. nat.
et al
Hoffmann, Eitle & Partner, Patentanwälte
Arabellastrasse 4
D-8000 Munich 81 (DE)**

EP 0 131 640 B1

Courier Press, Leamington Spa, England.

## Description

This invention relates generally to sweetness modification and more particularly to low-caloric compounds, particularly well suited as sweetness modifiers in edible foodstuffs.

Sweetness is one of the primary taste cravings of both animals and humans. Thus, the utilization of sweetening agents in foods in order to satisfy this sensory desire is well established.

Naturally occurring carbohydrate sweeteners, such as sucrose, are still the most widely used sweetening agents. While these naturally occurring carbohydrates, i.e. sugars, generally fulfill the requirements of sweet taste, the abundant usage thereof does not occur without deleterious consequences, e.g. high caloric input. In fact, often times the level of these sweeteners required to satisfy taste in foodstuffs is far higher than that level of sweetener which is desired for economic, dietetic or other functional considerations.

In an attempt to eliminate the disadvantages concomitant with natural sweeteners, considerable research and expense have been devoted to the production of artificial sweeteners, such as for example, saccharin, cyclamate, dihydrochalcone, aspartame, etc. While some of these artificial sweeteners satisfy the requirements of sweet taste without caloric input and have met with considerable commercial success, they are not, however, without their own inherent disadvantages. For example, many of these artificial sweeteners have the disadvantages of high cost of production, as well as delay in perception of the sweet taste, persistent lingering of the sweet taste, and very objectionable bitter, metallic after-taste when used in food products.

Since it is believed that many of the disadvantages of artificial sweeteners, particularly after-taste, are a function of the concentration of the sweetener, it has been previously suggested that these effects could be reduced or eliminated by combining artificial sweeteners, such as saccharin, with other ingredients or natural sugars, such as pectin, sorbitol, dextrose, maltose, etc. These combined products, however, have not been entirely satisfactory either. Some U.S. patents which disclose sweetener mixtures include, for example, U.S. Patent No. 4,228,198, U.S. Patent No. 4,158,068, U.S. Patent No. 4,154,862, U.S. Patent No. 3,717,477.

More particularly, U.S. Patent No. 4,228,198 discloses a sweetening composition comprised of a protein sweetener, saccharin or cyclamate in combination with a sweetness modifier, namely arabinogalactan. The patentee states that the arabinogalactan enhances the overall sweetness of the composition and reduces or eliminates the after taste.

U.S. Patent No. 4,158,068 discloses a sweetener mixture having an improved saccharose-like taste consisting of acetosulfame and at least one sweetener from the group of aspartyl peptide esters, the sulfamate sweeteners, the sulfimide sweeteners and dihydrochalcone sweeteners.

Mixtures of artifical sweeteners, such as saccharin and the like, and neodiosmin are disclosed, in U.S. Patent No. 4,154,862, to be of reduced bitterness and after taste, while U.S. Patent No. 3,717,477 discloses that the sweetening potency and taste of sodium saccharin are improved by the addition of small amounts of optically active D-tryptophan.

The use of sweetening agents in foods to provide functions other than sweetening, such as to act as fillers, bulking agents, antimicrobial agents, freezing point depressants, stabilizers, carriers, etc. is also well established. For example, U.S. Patent No. 3,597,236 discloses the optional use of dextrose, in less than sweetening amounts, as a carrier to provide a more uniform distribution of a preserving composition in and on the meat. The preserving composition comprises ascorbic acid, a compound selected from the group consisting of para-aminobenzoic acid, m-aminobenzoic acid, isonicotinic acid and N-ethylnicotinamide. Moreover, while J. Prakt Chemie, Vol. 36, pp. 93—107(1847) and Moncrieff, *The Chemical Senses*, pp 252—253 (1944) disclose m-aminobenzoic acid to be sweet, the literature does not disclose or remotely suggest that this compound would be an excellent foodstuff sweetener, particularly when employed in combination with sweetening amounts of known natural and/or artificial sweeteners.

Furthermore, it is well known that enormous quantities of sweeteners are utilized in beverages, particularly commercial soft drinks and dessert products, for example, gelatins. Since many of these beverages and desserts have an acidic pH, not only must the sweetener employed therein be acid stable, but it also must be effective under acid pH conditions. In the case of sweeteners such as sucrose and saccharin, it is known that sweetening potency is generally decreased in acidic systems. Thus, in these acidic products such as, for example, carbonated beverages, etc., it is necessary to utilize relatively large quantities of these sweeteners to achieve the desired level of sweetness. These large quantities of sweetener are often times far higher than the level of sweetener desired for economic, nutritional or other functional considerations.

Accordingly, in view of the aforementioned disadvantages associated with the use of known sweeteners, i.e., naturally occurring, artificial or combinations thereof, it becomes readily apparent that it would be highly desirable to provide a sweetness modifying agent which when added to foodstuffs can greatly reduce the level of deleterious sweetener normally required and concomitantly eliminate or greatly diminish the numerous disadvantages associated with prior art sweeteners.

The present invention provides a foodstuff composition comprising a foodstuff, a food acceptable sweetener in sweetening amount and a food acceptable, non-toxic amount of sweetness modifying agent selected from m-aminobenzoic acid, non-toxic salts thereof or mixtures thereof.

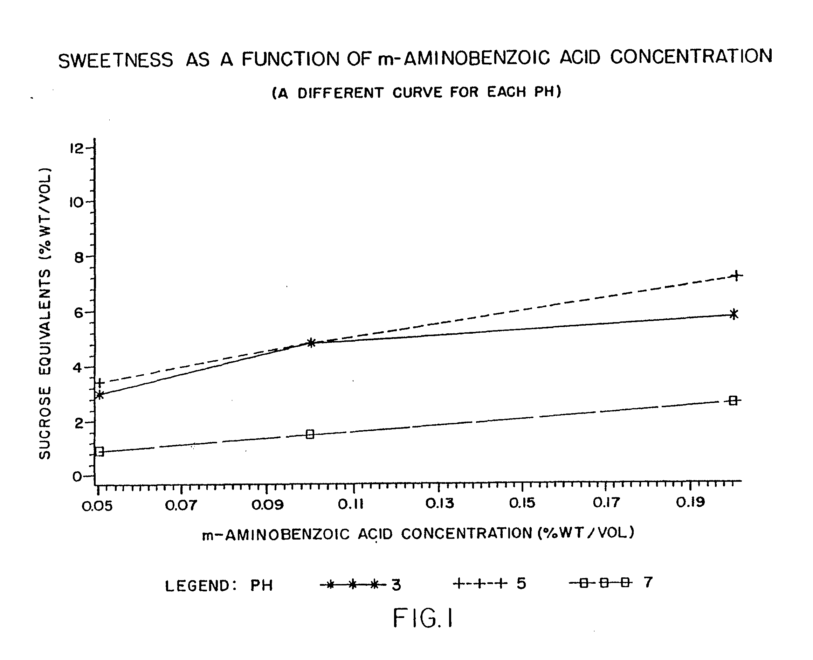

In the accompanying drawings, Fig. 1 is a graphical representation plotting the sweetness of m-aminobenzoic acid, in comparison to sucrose, as a function of concentration at varied levels of pH.

Fig. 2 is a graphical representation plotting the sweetness of sucrose as a function of concentration at varied levels of pH, in comparison to itself.

Fig. 3 is a further graphical representation plotting the sweetness of mixtures of m-aminobenzoic acid and sucrose, in comparison to sucrose, as a function of concentration at varied pH levels.

In accordance with the present invention, it has been discovered that m-aminobenzoic acid (also known as 3-aminobenzoic acid), when used in combination with a natural carbohydrate or synthetic sweetener in a foodstuff, permits a significant reduction in the amount of natural and/or synthetic sweetener ordinarily necessary to achieve the usually desired level of sweetness in the foodstuff. For example, it has been surprisingly found that when m-aminobenzoic acid is used in foodstuffs, even in relatively small quantities, 50% or more of the usually required sweetener, such as sucrose, can be eliminated from the foodstuff, while still achieving the same desired level of sweetness perception.

Thus, according to the present invention, it has been unexpectedly found that m-aminobenzoic acid and/or its food acceptable, non-toxic salts are effective sweetness modifying agents when used in combination with sweetening amounts of known natural and/or artificial sweeteners, including for example, sucrose, fructose, corn syrup solids, high fructose corn syrup, dextrose xylitol, sorbitol, mannitol, acesulfam, thaumatin, invert sugar, saccharin, cyclamate, dihydrochalcones, aspartame (L - aspartyl - L - phenylalanine methyl ester) and other dipeptides, glycyrrhizin, stevioside and the like.

Moreover, to achieve the desired results of the present invention, the utilization of only small quantities of m-aminobenzoic acid or its non-toxic salts are necessary. That is, for example, depending on the particular foodstuff and sweetener, the m-aminobenzoic acid is generally added to the foodstuff in sweetness modifying amounts. These amounts are generally in the range of from about 0.01 to about 0.8 weight percent, based on the consumed weight of the foodstuff. Preferably, the amount of m-aminobenzoic acid is utilized in amounts of from about 0.05 to about 0.4 weight percent and most preferably only from about 0.1 to about 0.2 weight percent, based on the consumed weight of the foodstuff. It has been observed herein that the quality of the foodstuff is best when the m-aminobenzoic acid is employed in amounts below about 0.4 wt.%. It is to be understood that these afore-described amounts of m-aminobenzoic acid are based on the consumed weight of the foodstuff. Thus, the amounts employed in a product, for example, a dry beverage mix, prior to taking its consumed form by the addition of diluents or solvents such as water, will necessarily vary accordingly in the preconsumed form of the foodstuff. That is, for example, in a pre-mix foodstuff comprising m-aminobenzoic acid or its salts, the m-aminobenzoic acid or its salts are present in an amount sufficient such that when a diluent is added to the premix foodstuff, the m-aminobenzoic acid or its salts are present in the diluted foodstuff in an amount, for example, in the range of from about 0.1 to about 0.8% by weight of the diluted foodstuff. By diluent or solvent herein, solid or liquid additives such as water, carbonated water, milk, alcohol, eggs, food-acceptable sweeteners as hereinbefore defined and like are contemplated. Pre-mix foodstuffs contemplated herein include, for example, dry mix and liquid foodstuffs and concentrates such as, for example, instant mix flavored beverages, instant mix gelatins and puddings, cake mixes, liquid beverage concentrates and the like. Furthermore, these afore-described sweetness modifying amounts are based on the free acid, namely m-aminobenzoic acid. Thus, in the event salts of this acid are utilized the amount of the salt employed in the foodstuff should be at least sufficient to provide the afore-described amounts of the acid.

Typical foodstuffs, including pharmaceutical preparations, in which the m-aminobenzoic acid or salts thereof of the present invention may be used as a sweetness modifier are, for example, beverages, including soft drinks, carbonated beverages, ready-to-mix beverages and the like infused foods (e.g. fruits or vegetables), sauces, condiments, salad dressings, juices, syrups, desserts, including puddings, gelatin and frozen desserts, like ice creams, sherbets and icings, confections, chewing gum, intermediate moisture foods (e.g. dog foods), toothpaste, mouthwashes and the like.

As indicated hereinbefore, it is especially preferred to utilize the m-aminobenzoic acid in foodstuff compositions having an acidic pH. Unlike other sweeteners, such as sucrose and saccharin, it has been found that m-aminobenzoic acid is most effective as a sweetness modifier in acidic foodstuff compositions. Thus foodstuff compositions having a pH in the range of 1 to below 7 are especially contemplated herein. Foodstuff compositions having an acidic pH below about 6.6 are preferred, while foodstuff compositions having a pH in the range of from about 2.0 to about 5.5 are most preferred. Typical acidic foodstuffs include beverages including carbonated beverages, tea, coffee, juices, gelatin, cakes, puddings, jams, jellies, berries, salad dressings, vegetables (e.g. carrots, spinach, sweet potatoes), tomatoes, sauces, soup with tomatoes, yogurt, cereals and confectionery (candy, gum, etc.).

Furthermore, as stated hereinbefore, the unexpected results of the present invention are provided when the sweetness modifying agent, namely m-aminobenzoic acid or its non-toxic salts, is employed in combination with a sweetener, such as those hereinbefore recited, in sweetening amounts. It is, of course, understood that when a mixture of sweeteners is utilized, it is not necessary that each sweetener be present in sweetening amounts provided that the sweetener mixture results in a sweetening amount.

Thus, for the purposes of this invention, best results are obtained when the m-aminobenzoic acid is employed in a foodstuff in combination with a sweetener, wherein the sweetener is present in amounts of above about 2 wt.% of sucrose equivalents. Preferably the sweetener content is in the range of from about 2 wt.% to about 25 wt.% sucrose equivalents and most preferably 4 wt.% to about 15 wt.% sucrose equivalents. Thus, wherein the sweetener is, for example, saccharin, the amounts of saccharin which correspond to the afore-recited sucrose equivalents are above about 0.007, preferably from about 0.007 to about 0.08 wt.% and most preferably from about 0.013 to about 0.05 wt.%. These values for aspartame are from above about 0.013, preferably about 0.013 to about 0.17, and most preferably about 0.03 to about 0.1. Sucrose equivalents for other known sweeteners are readily known or are easily determined. For example, the amount of a sweetener which is equivalent to 10 wt.% sucrose can be determined by having a panel taste a solution of a sweetener and match its sweetness to a 10 wt.% solution of sucrose. Obviously, sucrose equivalents for other than 10 wt.% sucrose are determined by matching the appropriate sucrose solutions.

For purposes herein the combination of sweetness modifier and sweetener should provide a total foodstuff sweetness of above about 4 wt.%, preferably from about 4 wt.% to about 40 wt.%, and most preferably from about 6 wt.% to about 16 wt.% sucrose equivalents.

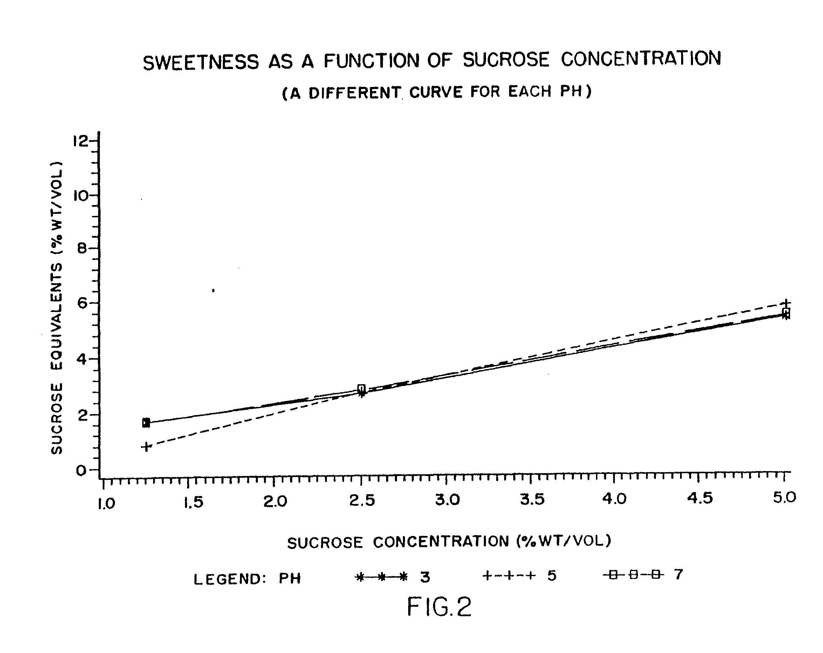

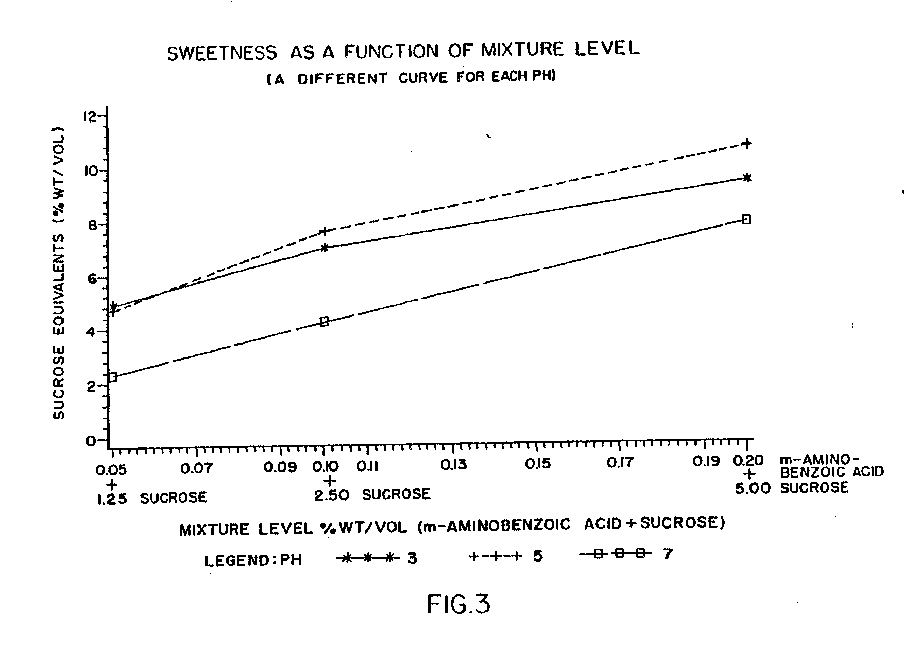

Referring to the drawings herein in more detail, Figs. 1—3 graphically illustrate the surprising results of the present invention. That is, Fig. 1 is a plot of the sweetness of aqueous m-aminobenzoic acid solutions in comparison to aqueous sucrose solutions (pH of the sucrose solutions adjusted to the pH of the m-aminobenzoic acid solutions) as a function of concentration at various pH levels. Fig. 2 is a similar plot for sucrose, comparing it to itself as a control. Fig. 1 shows that unlike sucrose, m-aminobenzoic acid exhibits higher potency in an acidic environment. For example, at pH 3 or 5 and at a concentration of 0.1 wt.%, m-aminobenzoic acid provides a sucrose equivalency of more than twice that of which it provides at pH 7 at the same concentration. Furthermore, Fig. 3 illustrates that an aqueous solution, for example, containing a mixture of 0.1 wt.% m-aminobenzoic acid and 2.5 wt.% sucrose at pH 7 has the equivalent sweetness of about 4.3 wt.% sucrose, while the same mixture of m-aminobenzoic acid and sucrose at pH 3 has a sucrose equivalency of about 7.1 wt.% and at a pH 5 of about 7.7 wt.%. These data clearly show that m-aminobenzoic acid has a surprisingly greater sweetness potency in an acidic environment.

In addition, the highly advantageous results of the present invention are further evidenced by a comparison of Figs. 2 and 3. That is, Fig. 3 shows, for example, that at pH levels of 3 and 5, a mixture, for instance, of 0.1% m-aminobenzoic acid and 2.5% sucrose solution is sweeter than a solution containing 5% sucrose as the sole sweetener, as illustrated by Fig. 2. Thus, it is readily apparent from this data that the utilization of m-aminobenzoic acid in foodstuffs allows for a significant reduction in the amounts of caloric and expensive sweetener, such as sucrose, ordinarily required, yet still achieving the desired level of sweetness in the foodstuff.

In summary, the data in Figs. 1 to 3 show, inter alia, that m-aminobenzoic acid is equivalent in sweetness to larger amounts of sucrose in pH 3 and 5 solutions than in pH 7 solutions. Moreover, the data further illustrate that on average, m-aminobenzoic can replace approximately three times more sucrose in pH 3 or 5 solutions than in pH 7 solutions. Similar results are obtained when m-aminobenzoic acid is used in combination with other sweeteners, such as saccharin and aspartame.

Briefly, the data illustrated by Figs. 1 to 3 were obtained by preparing aqueous solutions of m-aminobenzoic acid (0.5, .10, .20%), sucrose (1.25, 2.50, 5.00, 10.00%), and mixtures of m-aminobenzoic acid and sucrose (.05 and 1.25, .10 and 2.50, .20 and 5.00%, respectively) at pH levels of 3,5 and 7. The pH of each of the solutions was adjusted and maintained by the addition of conventional acids and/or bases, such as HCl or NaOH, and buffering agents such as citric acid and potassium citrate. The solutions were matched for sweetness to 1 to 14 sucrose solutions ranging in concentration from 0 to 13% in 1% increments. Each of the 18 subjects participated in 3 test sessions, one for each of the pH conditions. Within a session, all test solutions and sucrose standards were at the same pH, either 3, 5 or 7. All testing used a sip and spit procedure and was done double-blind. The data were analyzed by an analysis of variance.

The m-aminobenzoic acid of the present invention can be readily prepared according to well known synthetic procedures or can be obtained commercially (e.g. from PFaltz and Bauer). For purposes of optimization, it has been found advantageous to utilize about a 99% pure material. A simple procedure for obtaining a material of this purity is, for example, to add the m-aminobenzoic acid, with stirring, to boiling distilled water. When no solid material remains visible, granulated charcoal (food approved) is added to the solution and the mixture is stirred further. The resultant mixture is then hot filtered and slowly recrystallized at, for example, about 45—50°F. The resultant m-aminobenzoic acid has a purity of about 99%.

Furthermore, as stated hereinbefore, food acceptable, non-toxic salts of m-aminobenzoic acid are also contemplated herein. These salts include, sodium, potassium, calcium, magnesium, ammonium and the like and may be preformed or formed in-situ in the foodstuff by reaction with typical buffering agents, such as sodium citrate, potassium citrate, citric acid, sodium acetate, acetic acid, calcium phosphate, such as monocalcium phosphate and tri-calcium phosphate, phosphoric acid and the like which are also normally employed in foodstuffs to provide the desired pH.

Sweetening compositions comprised of m-aminobenzoic acid or its salts and a sweetener, such as sucrose, saccharin, aspartame (or mixtures) and the like are also contemplated herein. These sweetening compositions may be performed, formulated and packaged, for example, so that they can be readily added to a foodstuff to provide the hereinbeforenoted advantages. Moreover, these sweetening compositions may be added to foodstuffs which do not contain sweetener as well as to foodstuffs containing sweetener.

In order that those skilled in the art may better understand how the present invention may be practiced, the following examples are given by way of illustration and not by way of limitation.

Example 1

3-aminobenzoic acid (m-aminobenzoic acid) is added at varying levels to a flavored beverage at a pH of 3.5 containing 5% sucrose and evaluated by a panel of experts. The following results are observed, with 100 indicating the sweetness of a 5% solution of sucrose:

| Level of 3-amino-benzoic acid (% by weight of solution) | Perceived level of sweetness |
| --- | --- |
| 0 | 100 |
| 0.05 | 300 |
| 0.20 | 800 |
| 0.82 | 1200 |

These experiments demonstrate the increased level of sweetness resulting from the addition of 3-aminobenzoic acid to a beverage. Further, the level of perceived sourness decreased substantially, mainly due to the increase in perceived sweetness. This data show that when 3-aminobenzoic acid is added to a foodstuff containing a sweetener the level of sweetener required to achieve a desired level of sweetness can be substantially reduced.

Example 2

3-aminobenzoic acid is added at varying levels to a solution containing 0.017% by weight of saccharin and evaluated by a panel of experts. The following results are observed (wherein 100 is the sweetness of a 0.017% solution of saccharin judged to be equisweet to a 5% solution of sucrose):

| Level of 3-amino-benzoic acid (% by weight of solution) | Perceived level of sweetness |
| --- | --- |
| 0 | 100 |
| 0.14 | 110 |
| 0.50 | 170 |

The saccharin is not present at a threshold level wherein the bitter aftertaste is evident. These data indicate that when 3-aminobenzoic acid is added to a foodstuff containing saccharin, the level of saccharin ordinarily required to achieve a desired level of sweetness (usually accompanied by after taste) can be substantially reduced, without onset of the bitterness of the saccharin.

Example 3

As a control, an orange flavored beverage is prepared by mixing 12.6 gms unsweetened Tang[TM] instant beverage base mix with 875 gms of water and 115.4 gms (11.5 wt.%) sucrose. The Tang[TM] base contains a citric acid (6.6 gms) and potassium citrate (0.7 gms) buffer. The final aqueous mixture has a pH of about 3.0.

For comparative purposes, a further orange flavored beverage is prepared by mixing 875 gms of water, 12.6 gms of the same unsweetened Tang[TM] base mix as in the control and 46.16 gms sucrose (4.9 wt.%, which is 40% of the sucrose utilized in the control). The formulation has a pH of about 3.0.

For further comparison, another orange flavored beverage is prepared by mixing 875 gms of water, 12.6 gms of the same unsweetened Tang[TM] base mix 46.16 gms sucrose (4.9 wt.%, 40% of the sucrose in the control) and 1.87 gms (0.2 wt.%) of purified m-aminobenzoic acid. This formulation has a pH of about 3.2.

For additional comparison, a further orange flavored beverage is prepared by mixing 875 gms of water, 11.4 gms unsweetened Tang[TM] base, 46.16 gms sucrose (4.9 wt.%, 40%) of the sucrose in the control) and 1.87 gms (0.2 wt.%) purified m-aminobenzoic acid. In this formulation the citric acid in the unsweetened base is reduced to 5.5 gms (18% reduction) which is advantageously compensated for by the addition of the m-aminobenzoic acid. The pH of this formulation is about 3.2.

In evaluating and comparing the sweetness of the afore-described orange flavored beverage compositions, tasters assessed the sweetness of the beverages containing the 0.2 wt% m-aminobenzoic acid and 40% of the sucross used in the control to be as sweet as the 100% sucrose control composition as well as having acceptable quality. The same tasters assessed the 40% sucrose containing beverage with no m-aminobenzoic acid to be unacceptable.

Example 4

As a control, an orange flavored beverage is prepared by mixing 6.3 gms un-sweetened Tang[TM] instant beverage base mix with 438 gms of water and 57.7 gms (11.5 wt.%) sucrose. The Tang<sup>(TM)</sup> base contains a citric acid and potassium citrate buffer. The final aqueous mixture has a pH of about 3.0

For comparative purposes, a further orange flavored beverage is prepared by mixing 438 gms of water, 6.3 gms of the same un-sweetened Tang<sup>(TM)</sup> base mix as in the control, 43.3 gms sucrose (8.9 wt.%, which is 75% of the sucrose utilized in the control), and 0.24 gms (0.05 wt.%) m-aminobenzoic acid. The formulation has a pH of about 3.0.

For further comparison another orange flavored beverage is prepared by mixing 438 gms of water, 6.3 gms of the same unsweetened Tang<sup>(TM)</sup> base mix, 34.6 gms sucrose (7.2 wt.%, 60% of the sucrose in the control) and 0.72 gms (0.15 wt.%) of purified m-aminobenzoic acid. This formulation has a pH of about 3.1.

For additional comparison, a further orange flavored beverage is prepared by mixing 438 gms of water, 6.3 gms of the same unsweetened Tang<sup>(TM)</sup> base, 17.3 gms sucrose (3.7 wt.%, 30% of the sucrose in the control) and 1.85 gms (0.4 wt.%) purified m-aminobenzoic acid. The pH of this formulation is about 3.3.

In evaluating and comparing the sweetness of the afore-described orange flavored beverage compositions, tasters assessed the sweetness of the beverages containing the m-aminobenzoic acid and reduced sucrose to be as sweet as the 100% sucrose control composition as well as having acceptable quality.

Example 5

As a control, a cherry flavored beverage is prepared by mixing 1.48 gms of an unsweetened cherry flavored instant beverage base mix with 438 gms of water and 0.33 gms (0.075 wt.%) aspartame (APM). The base contains a malic acid and monocalcium phosphate buffer. The final aqueous mixture has a pH of about 3.0.

For comparative purposes, a further cherry flavored beverage is prepared by mixing 438 gms of water, 1.48 gms of same unsweetened base mix as in the control, 0.25 gms APM (0.057 wt.% which is 75% of the APM utilized in the control), and 0.22 gms (0.05 wt.%) purified m-aminobenzoic acid. The formulation has a pH of about 3.2.

For further comparison, another cherry flavored beverage is prepared by mixing 438 gms of water, 1.48 gms of the same unsweetened base mix, 0.20 gms APM (0.045 wt.%, 60% of the APM in the control) and 0.66 gms (0.15 wt.%) of purified m-aminobenzoic acid. The formulation has a pH of about 3.3.

For additional comparative purposes, a further cherry flavored beverage is prepared by mixing 438 gms of water, 1.48 gms of same unsweetened base mix as in the control, 0.13 gms APM (0.029 wt.% which is 40% of the APM utilized in the control), and .88 gms (0.20 wt.%) purified m-aminobenzoic acid. The formulation has a pH of about 3.4.

For further comparison, another cherry flavored beverage is prepared by mixing 438 gms of water, 1.48 gms of the same unsweetened base mix, 0.10 gms APM (0.023 wt.%, 30% of the APM in the control) and 1.76 gms (0.40 wt.%) of purified m-aminobenzoic acid. The formulatins has a pH of about 3.6.

In evaluating and comparing the sweetness of the afore-described cherry flavored beverage compositions, tasters assessed the sweetness of the beverages containing the m-aminobenzoic acid and reduced APM to be as sweet as the 100% APM control composition as well as having acceptable quality.

Example 6

As a control, a mixed fruit gelatin is prepared by mixing 5.16 gms of an unsweetened gelatin base mix with 237 gms of water and 0.12 gm (0.050 wt.%) saccharin. The gelatin base contains an adipic acid and disodium phosphate buffer. The final gelatin has a pH of about 3.69.

For comparative purposes, a further mixed fruit gelatin is prepared by mixing 237 gms of water, 5.16 gms of the same unsweetened gelatin base mix as in the control, 0.09 gm saccharin (0.037 wt.%, which is 75% of the saccharin used in the control) and 0.07 gm (0.03 wt.%) purified m-aminobenzoic acid. The final gelatin has a pH of about 3.71.

For further comparison, another mixed fruit gelatin is prepared by mixing 237 gms of water, 5.16 gms of the same unsweetened gelatin base mix, 0.07 gm saccharin (0.029 wt.%, 60% of the saccharin in the control) and 0.24 gm (0.10 wt.%) of purified m-aminobenzoic acid. This formulation has a pH of about 3.74.

For additional comparison, a further mixed fruit gelatin is prepared by mixing 237 gms of water, 5.16 gms of the same unsweetened gelatin base mix, 0.05 gm saccharin (0.021 wt.%, 40% of the saccharin in the control) and 0.48 gm (0.2 wt.%) purified m-aminobenzoic acid. This formulation has a pH of about 3.75.

In evaluating and comparing the sweetness of the afore-described gelatin compositions, tasters assessed the sweetness of the gelatins containing the m-aminobenzoic acid and reduced saccharin to be as sweet as the 100% saccharin control composition as well as having acceptable quality.

Example 7

As a control, a vanilla flavored pudding is prepared by mixing 21.7 gms unsweetened vanilla instant pudding base mix with 474 gms of milk and 90.0 gms (15.4 wt.%) sucrose. The pudding base contains 1.35 gms of sodium acid pyrophosphate resulting in a pudding formulation having a pH of about 6.5.

For comparative purposes, a further vanilla flavored pudding is prepared by mixing 474 gms of milk, 21.6 gms of the same unsweetened pudding base mix as in the control, 36.0 gms sucrose (6.8 wt.%, which is 40% of the sucrose utilized in the control). The formulation has a pH of about 6.5.

For further comparison another vanilla flavored pudding is prepared by mixing 474 gms of milk, 21.7 gms of the same unsweetened pudding base mix, 36.0 gms sucrose (6.7 wt.%, 40% of the sucrose in the control) and 2.44 gms (0.4 wt.%) of the purified calcium salt of m-aminobenzoic acid. This formulation has a pH of about 6.3.

In evaluating and comparing the sweetness of the afore-described vanilla flavored pudding compositions, tasters assessed the sweetness of the pudding containing 0.4 wt.% of the calcium salt of m-aminobenzoic acid and 40% sucrose of the control to be as sweet as the 100% sucrose control composition as well as having acceptable quality. The vanilla flavored pudding composition containing 40% sucrose of the control composition and no calcium salt of m-aminobenzoic acid was not acceptable.

Example 8

As a control, an angel food cake is prepared by baking an angel food cake batter containing 37 wt.% sucrose (pH about 5.6).

For comparative purposes, an angel food cake is prepared by baking the same angel food cake batter containing 22.5 wt.% sucrose and 0.3 wt.% m-aminobenzoic acid (pH about 5.01).

In evaluating and comparing the sweetness of the afore-described angel food cakes, tasters assessed the sweetness of the cake containing the m-aminobenzoic acid and reduced sucrose to be as sweet as the 100% sucrose control cake as well as having acceptable quality.

Example 9

As a control, a ready-to-drink cola containing about 10.6 wt.% sucrose is prepared by mixing 79.45 gms sucrose, 49.8 gms water, 3.6 gms cola concentrate and 617.1 gms salt free club soda. The final cola has a pH of about 2.6.

For comparative purposes, a further ready-to-drink cola beverage is prepared by admixing 97.5 gms water, 31.78 gms sucrose (4.2 wt.% sucrose, 40% of the control), 3.6 gms cola concentrate, 0.2 wt.% m-aminobenzoic acid and 617.1 gms salt free club soda. This cola has a pH of about 3.4.

In evaluating and comparing the sweetness of the afore-described cola beverages, tasters assessed the sweetness of the beverage containing the m-aminobenzoic acid and reduced sucrose to be as sweet as the 100% sucrose control cola as well as having acceptable quality.

Example 10

As a control, a ready-to-drink cola containing about 0.035wt.% saccharin is prepared by mixing 0.44 gms saccharin, 215.0 gms water, 6.1 gms cola concentrate and 1028.5 gms salt free club soda. The final cola has a pH of about 2.8.

For comparative purposes, a further ready-to-drink cola beverage is prepared by admixing 117 gms water, 0.11 gm saccharin (0.014 wt.% saccharin, 40% of the control), 3.6 gms cola concentrate, 0.2 wt.% m-aminobenzoic acid and 1028.3 gms salt free club soda. This cola has a pH of about 3.4.

In evaluating and comparing the sweetness of the afore-described cola beverages, tasters assessed the sweetness of the beverage containing the m-aminobenzoic acid and reduced saccharin to be as sweet as the 100% saccharin control as well as having acceptable quality.

Example 11

As a control, a lemon flavored beverage is prepared by mixing 8.1 gms unsweetened lemon beverage base mix with 875 gms of water and 0.39 gms (0.044 wt.%) APM. The lemon mix contains a citric acid, potassium citrate, and tricalcium phosphate buffer. The final aqueous mixture has a pH of about 2.9.

For comparative purposes, a further lemon flavored beverage is prepared by mixing 875 gms of water, 8.1 gms of the same unsweetened base mix as in the control and 0.156 gms APM (.018 wt.%, which is 40% of the APM utilized in the control). The formulation has a pH of about 2.9.

For further comparison, another lemon flavored beverage is prepared by mixing 875 gms of water, 8.1 gms of the same unsweetened base mix, 0.156 gms APM (.018 wt.%, 40% of the APM in the control) and 1.77 gms (0.2 wt.%) of purified m-aminobenzoic acid. This formulation has a pH of about 3.2.

In evaluating and comparing the sweetness of the afore-described lemon flavored beverage compositions, tasters assessed the sweetness of the beverages containing the 0.2 wt.% m-aminobenzoic acid and 40% of the APM used in the control to be as sweet as the 100% APM control composition as well as having acceptable quality. The same tasters assessed the 40% APM containing beverage with no m-aminobenzoic acid to be unacceptable.

**Claims**

1. A foodstuff composition comprising a food-acceptable sweetener in sweetening amounts and a sweetness modifying agent selected from m-aminobenzoic acid and/or food-acceptable, non-toxic salts thereof, wherein the sweetness modifying agent is present in a food-acceptable sweetness modifying amount.

2. The foodstuff composition of Claim 1 wherein said foodstuff has an acidic pH.

3. The foodstuff composition of Claim 1 or 2 wherein said sweetness modifying agent is m-aminobenzoic acid.

4. The foodstuff composition of Claims 1, 2 or 3 wherein said food-acceptable sweetener is selected from sucrose, fructose, corn syrup solids, high fructose corn syrups, dextrose, xylitol, sorbitol, mannitol, acesulfam, thaumatin, invert sugar, saccharin, cyclamate, dihydrochalcone, aspartame, stevioside, glycyrrhizin or mixtures thereof.

5. The foodstuff composition of any of Claims 1 to 4 wherein said sweetener is present in said foodstuff in amounts above about 2 wt.% of sucrose equivalents.

6. The foodstuff composition of any of Claims 1 to 3 wherein said foodstuff is a flavored beverage having an acidic pH and said sweetness modifying agent is present in an amount of from about 0.05 to about 0.3% by weight of the foodstuff composition.

7. A process for modifying the sweetness perception of a foodstuff, said process comprising adding to a foodstuff, a food-acceptable sweetness modifying amount of a sweetness modifying agent selected from m-aminobenzoic acid and/or food-acceptable, non-toxic salts thereof, said foodstuff comprising a food-acceptable sweetener in sweetening amounts.

8. The process of Claim 7 wherein said foodstuff has an acidic pH.

9. The process of Claim 7 or 8 wherein said food-acceptable sweetener is selected from sucrose, fructose, corn syrup solids, high fructose corn syrup, dextrose, xylitol, sorbitol, mannitol, acesulfam, thaumatin, invert sugar, saccharin, cyclamate, dihydrochalcone, aspartame, stevioside, glycyrrhizin or mixtures thereof.

10. The process of Claims 8, 9 or 10 wherein said sweetener is present in said foodstuff in amounts above about 2 wt.% of sucrose equivalents.

11. The process of Claim 10 wherein said food-acceptable sweetener is present in an amount from about 4 wt.% to about 15 wt.% of sucrose equivalents.

12. The process of any of Claims 7 to 11 wherein said foodstuff is a flavored beverage having an acidic pH and said sweetness modifying agent is present in an amount of from about 0.05 to about 0.4% by weight of said flavored beverage.

13. A sweetening composition to be added to a foodstuff, said sweetening composition comprising a food-acceptable sweetener and a sweetness modifying agent selected from m-aminobenzoic acid and/or food-acceptable, non-toxic salts thereof, wherein said sweetness modifying agent is present in said sweetening composition in an amount sufficient such that when said sweetening composition is added to a foodstuff said sweetness modifying agent is present in said foodstuff in an amount from about 0.01 to about 0.8 percent by weight of the foodstuff.

14. The sweetening composition of Claim 13 wherein said sweetness modifying agent is m-aminobenzoic acid.

15. The sweetening composition of Claim 13 or 14 wherein said food-acceptable sweetener is selected from sucrose, fructose, corn syrup solids, high fructose corn syrup, dextrose, xylitol, sorbitol, mannitol, acesulfam, thaumatin, invert sugar, saccharin, cyclamate, dihydrochalcone, aspartame, stevioside, glycyrrhizin or mixtures thereof.

16. A pre-mix foodstuff comprising a foodstuff, a food-acceptable sweetener in sweetening amounts and a sweetness modifying agent selected from m-aminobenzoic acid and/or food-acceptable, non-toxic salts thereof, wherein said sweetness modifying agent is present in said pre-mix foodstuff in an amount sufficient such that when a diluent is added to said pre-mix foodstuff said sweetness modifying agent is present in the diluted foodstuff in an amount from about 0.1 to about 0.8% by weight of the diluted foodstuff.

17. The pre-mix foodstuff of Claim 16 wherein said sweetness modifying agent is m-aminobenzoic acid.

18. The pre-mix foodstuff of Claim 16 or 17 wherein said diluent is water.

19. The pre-mix foodstuff of any of Claims 16 to 18 wherein the diluent includes the food-acceptable sweetener in sweetening amounts.

## Patentansprüche

1. Nahrungsmittelzusammensetzung, umfassend ein in einer süssenden Menge vorhandenes, für Nahrungsmittel geeignetes Süssungsmittel und ein die Süsse modifizierendes Mittel, ausgewählt aus m-Aminobenzoesäure und/oder nahrungsmittelgeeigneten, nichttoxischen Salzen davon, dadurch gekennzeichnet, dass das die Süsse modifizierende Mittel in einer nahrungsmittelgeeigneten, die Süsse modifizierenden Menge vorhanden ist.

2. Nahrungsmittelzusammensetzung gemäss Anspruch 1, dadurch gekennzeichnet, dass das Nahrungsmittel einen sauren pH-Wert hat.

3. Nahrungsmittelzusammensetzung gemäss Anspruch 1 oder 2, dadurch gekennzeichnet, dass das die Süsse modifizierende Mittel m-Aminobenzoesäure ist.

4. Nahrungsmittelzusammensetzung gemäss Ansprüchen 1, 2 oder 3, dadurch gekennzeichnet, dass das für Nahrungsmittel geeignete Süssungsmittel ausgewählt ist aus Saccharose, Fructose, Maissirup-Feststoffen, Maissirupen mit hohem Fructosegehalt, Dextrose, Xylit, Sorbit, Mannit, Acesulfam, Thaumatin, Invertzucker Saccharin, Cyclamat, Dihydrochalcon, Aspartam, Steviosid, Glycyrrhizin oder Mischungen davon.

5. Nahrungsmittelzusammensetzung gemäss einem der Ansprüche 1 bis 4, dadurch gekennzeichnet, dass das Süssungsmittel . in dem Nahrungsmittel in einer Menge oberhalb etwa 2 Gew.% des Saccharoseäquivalents vorliegt.

6. Nahrungsmittelzusammensetzung gemäss einem der Ansprüche 1 bis 3, dadurch gekennzeichnet, dass das Nahrungsmittel ein mit einem Geschmacksstoff versehnes Getränk mit einem sauren pH-Wert ist und dass das die Süsse modifizierende Mittel in einer Menge von etwa 0,05 bis etwa 0,3 Gew.% der Nahrungsmittelzusammensetzung vorliegt.

7. Verfahren zum Modifizieren des Süsseindrucks eines Nahrungsmittels, dadurch gekennzeichnet, dass man zu einem Nahrungs in einer die Süsse modifizierenden Menge ein die Süsse modifizierendes Mittel, ausgewählt aus m-Aminobenzoesäure und/oder nahrungsmittelgeeigneten, nicht-toxischen Salzen davon, zugibt, wobei das Nahrungsmittel ein nahrungsmittelgeeignetes Süssungsmittel in einer süssenden Menge umfasst.

8. Verfahren gemäss Anspruch 7, dadurch gekennzeichnet, dass das Nahrungsmittel einen sauren pH-Wert hat.

9. Verfahren gemäss Anspruch 7 oder 8, dadurch gekennzeichnet, dass das nahrungsmittelgeeignete Süssungsmittel ausgewählt ist aus Saccharose, Fructose, Maissirup-Feststoffen, Maissirup mit hohem Fructosegehalt, Dextrose, Xylit, Sorbit, Mannit, Acesulfam, Thaumatin, Invertzucker, Saccharin, Cyclamat, Dihydrochalcon, Aspartam, Steviosid, Cycyrrhizin oder Mischungen davon.

10. Verfahren gemäss Ansprüchen 8, 9 oder 10, dadurch gekennzeichnet, dass das Süssungsmittel in dem Nahrungsmittel in eicer Menge oberhalb etwa 2 Gew.% des Saccharoseäquivalents vorliegt.

11. Verfahren gemäss Anspruch 10, dadurch gekennzeichnet, dass das nahrungsmittelgeeignete Süssungsmittel in einer Menge von etwa 4 Gew.% bis etwa 15 Gew.% des Saccharoseäquivalents vorliegt.

12. Verfahren gemäss einem der Ansprüche 7 bis 11, dadurch gekennzeichnet, dass das Nahrungsmittel ein mit einem Geschmacksstoff versehenes Getränkt mit einem sauren pH-Wert ist und dass das die Süsse modifizierende Mittel in einer Menge von etwa 0,05 bis etwa 0,4 Gew.% des mit einem Geschmacksstoff versehenen Getränks vorliegt.

13. Eine zu einem Nahrungsmittel zuzugebende, süssende Zusammensetzung, wobei die süssende Zusammensetzung ein nahrungsmittelgeeignetes Süssungsmittel und ein die Süsse modifizierendes Mittel aus der Gruppe m-Aminobenzoesäure und/oder nahrungsmittelgeeigneten nicht-toxischen Salzen davon umfasst, dadurch gekennzeichnet, dass das die Süsse modifizierende Mittel in der zu süssenden Zusammensetzung in einer Menge vorliegt, die ausreicht, dass dann, wenn man die süssende Zusammensetzung zu einem Nahrungsmittel gibt, das die Süsse modifizierende Mittel in dem Nahrungsmittel in einer Menge von etwa 0,01 bis etwa 0,8 Gew.% bezogen auf das Nahrungsmittel, vorliegt.

14. Süssende Zusammensetzung gemäss Anspruch 13, dadurch gekennzeichnet, dass das die Süsse modifizierende Mittel m-Aminobenzoesäure ist.

15. Süssende Zusammensetzung gemäss Anspruch 13 oder 14, dadurch gekennzeichnet, dass das nahrungsmittelgeeignete Süssungsmittel aus Saccharose, Fructose, Maissirup-Feststoffen, Maissirup mit hohem Frucoosegehalt, Dextrose, Xylit, Sorbit, Mannit, Acesulfam, Thaumatin, Invertzucker, Saccharin, Cyclamat, Dihydrochalcon, Aspartam, Steviosid, Glycyrrhizin oder Mischungen davon ausgewählt ist.

16. Ein vorgemischtes Nahrungsmittel aus Nahrungsmittel, einem nahrungsmittelgeeigneten Süssungsmittel in einer für die Süsse ausreichenden Menge und einem die Süsse modifizierenden Mittel, ausgewählt aus m-Aminobenzoesäure und/oder nahrungsmittelgeeigneten, nicht-toxischen Salzen davon, dadurch gekennzeichnet, dass das die Süsse modifizierende Mittel in dem vorgemischten Nahrungsmittel in einer Menge vorhanden ist, die ausreicht, dass dann, wenn ein Verdünnungsmittel zu dem vorgemischten Nahrungsmittel zugegeben wird, das die Süsse modifizierende Mittel in dem verdünnten Nahrungsmittel in einer Menge von etwa 0,1 bis etwa 0,8 Gew.% des verdünnten Nahrungsmittel vorliegt.

17. Vorgemischtes Nahrungsmittel gemäss Anspruch 16, dadurch gekennzeichnet, dass das die Süsse modifizierende Mittel m-Aminobenzoesäure ist.

18. Vorgemischtes Nahrungsmittel gemäss Anspruch 16 oder 17, dadurch gekennzeichnet, dass das Verdünnungsmittel Wasser ist.

19. Vorgemischtes Nahrungsmittel gemäss einem der Ansprüche 16 bis 18, dadurch gekennzeichnet, dass das Verdünnungsmittel das nahrungsmittelgeeignete Süssungsmittel in einer süssenden Menge enthält.

**Revendications**

1. Composition alimentaire comprenant un édulcorant acceptable pour denrées alimentaires en quantité efficace comme édulcorant et un modificateur du goût sucré choisi parmi l'acide m-aminobenzoïque et/ou ses sels non toxiques acceptables pour les denrées alimentaires, le modificateur du goût sucré étant présent en quantité acceptable pour les denrées alimentaires, efficace pour modifier le goût sucré.

2. Composition alimentaire selon la revendication 1, dans laquelle ledit aliment a un pH acide.

3. Composition alimentaire selon la revendication 1 ou 2, dans laquelle ledit modificateur du goût sucré est l'acide m-aminobenzoïquie.

4. Composition alimentaire selon les revendications 1, 2 ou 3, dans laquelle ledit édulcorant acceptable pour denrées alimentaires est choisi parmi le saccharose, le fructose, les solides de trampage de maïs, les sirops de trempage de maïs à forte teneur en fructose, le dextrose, le xylitol, le sorbitol, le mannitol, l'acésulfame, la thaumatine, le sucre inverti, la saccharine, le cyclamate, la dihydrochalcone, l'aspartame, le stévioside, la glycyrrhizine ou leurs mélanges.

5. Composition alimentaire selon l'une quelconque des revendications 1 à 4, dans laquelle ledit édulcorant est présent dans ledit aliment en quantités de plus d'environ 2% en poids d'équivalents de saccharose.

6. Composition alimentaire selon l'une quelconque des revendications 1 à 3, dans laquelle ledit aliment est une boisson aromatisée ayant un pH acide et ledit modificateur du goût sucré est présent en quantité d'environ 0,05 à environ 0,3% en poids de la composition alimentaire.

7. Procédé pour modifier la perception du goût sucré d'un aliment, ledit procédé comprenant l'addition à un aliment d'une quantité modifiant le goût sucré, acceptable pour les denrées alimentaires, d'un modificateur du goût sucré choisi parmi l'acide m-aminobenzoïque et/ou ses sels non toxiques acceptables pour les denrées alimentaires, ledit aliment comprenant un édulcorant acceptable pour les denrées alimentaires en quantités efficaces comme édulcorant.

8. Procédé selon la revendication 7, dans lequel ledit aliment a un pH acide.

9. Procédé selon la revendication 7 ou 8, dans lequel ledit édulcorant acceptable pour les denrées alimentaires est choisi parmi le saccharose, le fructose, le sirop et les solides de trempage de maïs riches en fructose, le dextrose, le xylitol, le sorbitol, le mannitol, l'acésulfame, la thaumatine, le sucre inverti, la saccharine, le cyclamate, la dihydrochalcone, l'aspartame, le stévioside, la glycyrrhizine ou leurs mélanges.

10. Procédé selon les revendications 8, 9 ou 10, dans lequel ledit édulcorant est présent dans ledit aliment en quantités de plus d'environ 2% en poids d'équivalents de saccharose.

11. Procédé selon la revendication 10, dans lequel ledit édulcorant acceptable pour les denrées alimentaires est présent en quantités d'environ 4 à environ 15% en poids d'équivalents de saccharose.

12. Procédé selon l'une quelconque des revendications 7 à 11, dans lequel ledit aliment est une boisson aromatisée ayant un pH acide et ledit modificateur du goût sucré est présent en quantités d'environ 0,05 à 0,4% en poids de ladite boisson.

13. Composition édulcorante à ajouter à un aliment, ledit composition édulcorante comprenant un édulcorant acceptable pour les denrées alimentaires et un modificateur du goût sucré choisi parmi l'acide m-aminobenzoïque et/ou ses sels non toxiques acceptables pour les denrées alimentaires, dans laquelle ledit modificateur du goût sucré est présent dans ladite composition édulcorante en quantités suffisantes pour que, lorsque ladite composition édulcorante est ajoutée à un aliment, ledit modificateur du goût sucré soit présent dans ledit aliment en quantités d'environ 0,01 à environ 0,8% en poids de l'aliment.

14. Composition édulcorante selon la revendication 13, dans laquelle ledit modificateur du goût sucré est l'acide m-aminobenzoïque.

15. Composition édulcorante selon la revendication 13, dans laquelle ledit édulcorant acceptable pour les denrées alimentaires est choisi parmi le saccharose, le fructose, les solides de trempage de maïs, les sirops de trempages de maïs à forte teneur en fructose, le dextrose, le xylitol, le sorbitol, le mannitol, l'acésulfame, le thaumatine, le sucre inverti, la saccharine, le cyclamate, la dihydrochalcone, l'aspartame, le stévioside, la glycyrrhizine ou leurs mélanges.

16. Prémélange alimentaire comprenant un aliment, un édulcorant acceptable pour les denrées alimentaires en quantité efficace comme édulcorant et un modificateur du goût sucré choisi parmi l'acide m-aminobenzoïque et/ou ses sels non toxiques acceptables pour les denrées alimentaires, ledit modificateur du goût sucré étant présent dans ledit prémélange alimentaire en quantité suffisante pour que, lorsqu'on ajoute un diluant audit prémélange alimentaire, ledit modificateur du goût sucré soit présent dans ledit aliment dilué en quantité d'environ 0,1 à environ 0,8% en poids de l'aliment dilué.

17. Prémélange alimentaire selon la revendication 16, dans leque ledit modificateur du goût sucré est l'acide m-aminobenzoïque.

18. Prémélange alimentaire selon la revendication 16 ou 17, dans leque ledit diluant est l'eau.

19. Prémélange selon l'une quelconque des revendications 16 ou 18, dans lequel le diluant contient l'édulcorant acceptable pour denrées alimentaires en quantités efficaces comme édulcorant.

SWEETNESS AS A FUNCTION OF m-AMINOBENZOIC ACID CONCENTRATION

(A DIFFERENT CURVE FOR EACH PH)

LEGEND: PH  -*-*-*- 3  +-+-+ 5  -□-□-□ 7

FIG.1

# SWEETNESS AS A FUNCTION OF SUCROSE CONCENTRATION
## (A DIFFERENT CURVE FOR EACH PH)

LEGEND: PH    ✳—✳—✳ 3    +—+—+ 5    ▢—▢—▢ 7

## FIG.2

SWEETNESS AS A FUNCTION OF MIXTURE LEVEL

(A DIFFERENT CURVE FOR EACH PH)

FIG.3